# EUROPÄISCHE PATENTSCHRIFT

(11) **EP 0 655 359 B1**
(45) Veröffentlichungstag und Bekanntmachung des Hinweises auf die Patenterteilung: **05.03.1997**
(21) Anmeldenummer: 94112322.6
(22) Anmeldetag: 06.08.1994
(51) Int. Cl.: B60J 3/00

(54) **Sonnenblende für Fahrzeuge**
Sun visor for vehicles
Pare-soleil pour véhicules

(30) Priorität: 30.11.1993 DE 4340685
(43) Veröffentlichungstag der Anmeldung: 31.05.1995
(73) Patentinhaber: BECKER GROUP EUROPE GmbH, 42285 Wuppertal (DE)
(72) Erfinder: Viertel, Lothar, D-66802 Altforweiler (DE); Welter, Patrick, F-57730 La Chambre (FR)

(56) Entgegenhaltungen:
- EP-B- 0 266 327
- DE-A- 3 324 169
- US-A- 4 796 944
- US-A- 5 005 895
- US-A- 5 022 699
- US-A- 5 067 764

## Beschreibung

Die Erfindung bezieht sich auf eine Sonnenblende für Fahrzeuge mit einem Sonnenblendenkörper, der an einer Breitseite eine Öffnung mit einer darin eingesetzten Spiegelbaueinheit aufweist, die ein Spiegelgehäuse mit Spiegel und einen im Spiegelgehäuse gelagerten Schiebedeckel umfaßt, der wahlweise in eine den Spiegel abdeckende oder den Spiegel freigebene Position verschiebbar ist, wobei das Spiegelgehäuse einen abdeckenden Abschnitt aufweist, der im wesentlichen den Schiebedeckel in dessen geöffneter, den Spiegel freigebenden Stellung abdeckt.

Eine Sonnenblende der gattungsgemäßen Art ist durch die EP-B-0 266 327 bekanntgeworden. Ausgehend von diesem Stand der Technik liegt der Erfindung die Aufgabe zugrunde, die Bedienung des Schiebedeckels zu erleichtern, wie auch die Stilistik der Sonnenblende im Sinne einer Wertschöpfung anzuheben.

Zur Lösung dieser Aufgabe ist erfindungsgemäß vorgesehen, daß im Spiegelgehäuse weiterhin eine Öffnungsautomatik für den Schiebedeckel angeordnet ist. Auf diese Weise wird das Öffnen des Schiebedeckels und damit die Freigabe des Spiegels wesentlich erleichtert, zumal die Öffnungsautomatik z.B. auf Tasterdruck zu reagieren vermag. Sollte sich herausstellen, daß die Käuferschaft ein manuelles Öffnen und ein automatisches Schließen des Schiebedeckels bevorzugt, ließe sich auch eine diesbezügliche Umkehr des Systems verwirklichen.

Die Öffnungsautomatik ist in besonders einfacher Weise, nämlich durch bloßes Lösen einer den Schiebedeckel in der geschlossenen Lage haltenden Verrieglungsvorrichtung betätigbar.

Um den baulichen Aufwand in Grenzen zu halten, weist die Öffnungsautomatik Federmittel auf. Insbesondere kann für die Öffnungsautomatik eine Druckfeder Vorgesehen sein, die durch Verschieben des Schiebedeckels in die den Spiegel abdeckende Position spannbar und durch Lösen der Verriegelungsvorrichtung unter Mitnahme des Schiebedeckels in die den Spiegel freigebende Position entspannbar ist.

Gemäß einer bevorzugten Ausgestaltung der Erfindung ist vorgesehen, daß die Druckfeder als Schraubenfeder ausgebildet und von einer parallel zur Verschieberichtung des Schiebeldeckels im Spiegelgehäuse gelagerten Führungsstange aufgenommen ist und daß sich die Druckfeder mit dem einen Ende an einem am Schiebedeckel befindlichen Steg und mit dem anderen Ende an einem Steg des Spiegelgehäuses abstützt. Die Einzelteile der Öffnungsautomatik können somit aus besonders einfachen und damit auch besonders kostengünstig bereitzustellenden Mitteln bestehen. In diesem Sinne ist auch eine weitere Ausgestaltung zu verstehen, gemäß der vorgesehen ist, daß die Verriegelungsvorrichtung zwei entgegengesetzt ausgerichtete miteinander verrastbare zahnförmige Erhebungen aufweist, von denen die eine an der Unterseite des Schiebedeckels und die andere an einem Entriegelungselement angeordnet ist, wobei das Entriegelungselement mit einem ein Durchgangsloch im Spiegelgehäuse durchsetzenden Druckknopf ausgebildet und durch eine Rückstellfeder abgestützt ist. Da die Einzelteile mit Ausnahme der Federelemente als Kunststoff-Spritzgußteile ausgebildet sind, lassen sich sowohl die zahnförmigen Erhebungen als auch der Druckknopf jeweils einstückig daran anformen.

Um das gute Aussehen der Sonnenblende zu erhöhen, ist am Spiegelgehäuse bevorzugterweise ein weiteres Funktionselement angeordnet, indem vorgesehen ist, daß das Spiegelgehäuse weiterhin mit einer in einer Gehäusevertiefung angeordneten Ticketklammer ausgerüstet ist, die sich bevorzugt im den Schiebedeckel in dessen geöffneter Stellung abdeckenden Abschnitt des Spiegelgehäuses befindet.

Bei der erfindungsgemäßen Sonnenblende kann das Spiegelgehäuse mit Spiegel, Schiebedeckel und den Funktionselementen der Öffnungsautomatik vormontiert und als Baueinheit mit dem Sonnenblendenkörper verbunden werden. Der Sonnenblendenkörper besteht bevorzugt aus Polypropylen-Partikelschaum, der es ermöglicht, eine stoffschlüssige Verbindung mit dem Spiegelgehäuse einzugehen. Das Spiegelgehäuse weist zu diesem Zweck erhöhte Bereiche oder Materiallappen auf, die mittels einer erhitzten Platte nach Art des Spiegelschweißens erhitzt und angeschmolzen und sodann in das Material des Sonnenblendenkörpers im Boden der Öffnung eingedrückt werden, um sich mit dem Material des Sonnenblendenkörpers stoffschlüssig zu vereinigen. Das Spiegelgehäuse muß also nicht, wie bisher üblich, mit der Sonnenblendenumhüllung schweißgemäß verbunden werden. Daher wird ein Recyceln der Sonnenblende wesentlich erleichtert.

Nur der Vollständigkeit halber sei erwähnt, daß die neue Sonnenblende ggf. auch mit einer in der EP-B-0 266 327 gezeigten oder ähnlich aufgebauten Beleuchtungseinrichtung vervollkommnet werden kann.

Im nachfolgenden wird die Erfindung anhand der ein bevorzugtes Ausführungsbeispiel zeigenden Zeichnung näher erläutert. Es zeigen:
- Fig. 1: eine Draufsicht auf eine Sonnenblende mit installierter Spiegelbaueinheit,
- Fig. 2: einen Schnitt folgend der Linie G-N in Fig. 1,

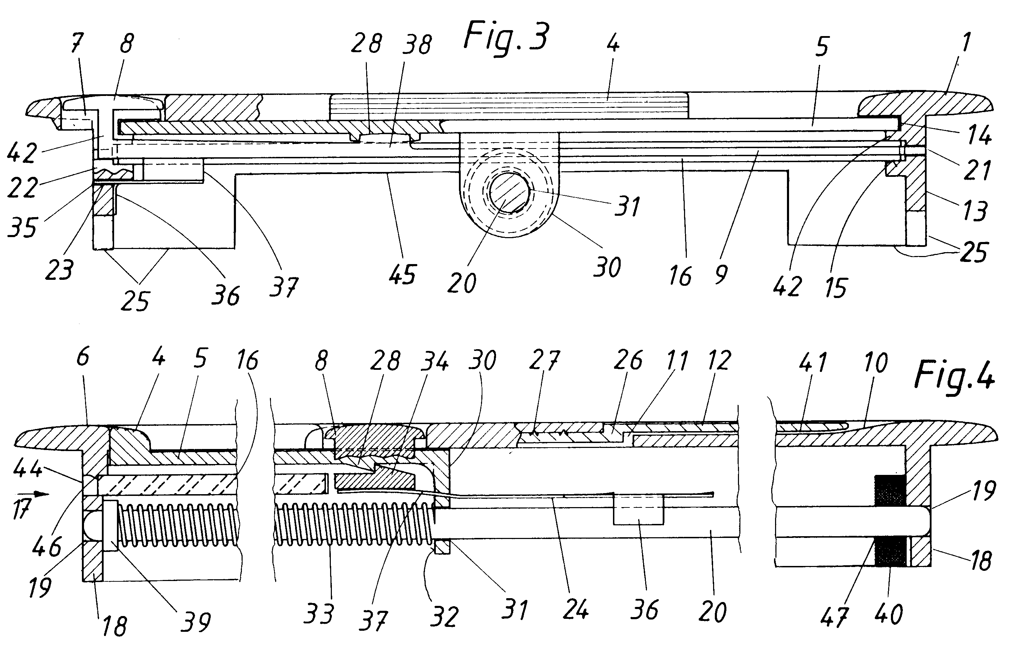

- Fig. 3: einen ebensolchen Schnitt G-N jedoch lediglich durch die Spiegelbaueinheit,
- Fig. 4: einen Schnitt A-F durch die Spiegelbaueinheit nach Fig. 1 und

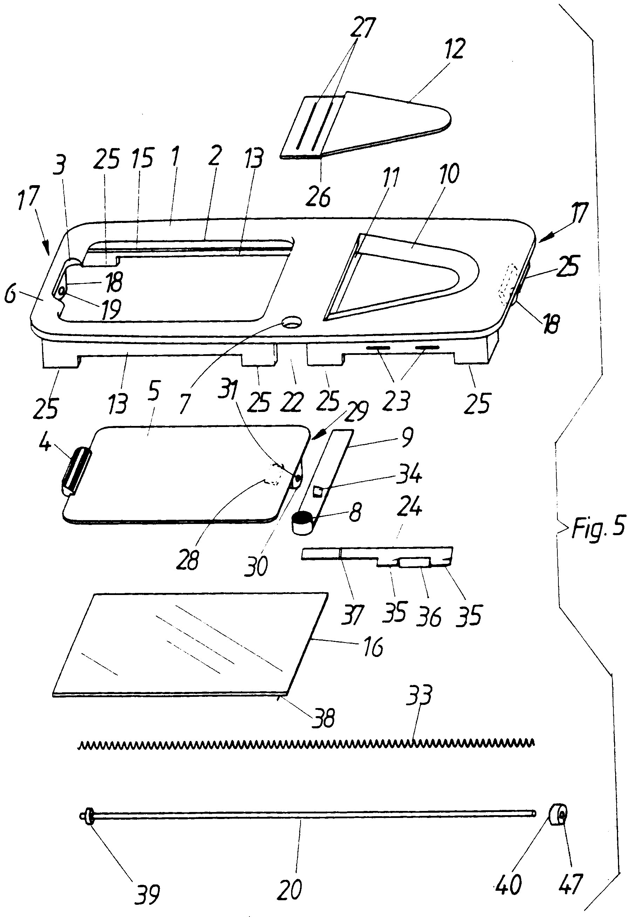

- Fig. 5: eine perspektivische Explosivdarstellung der Spiegelbaueinheit.

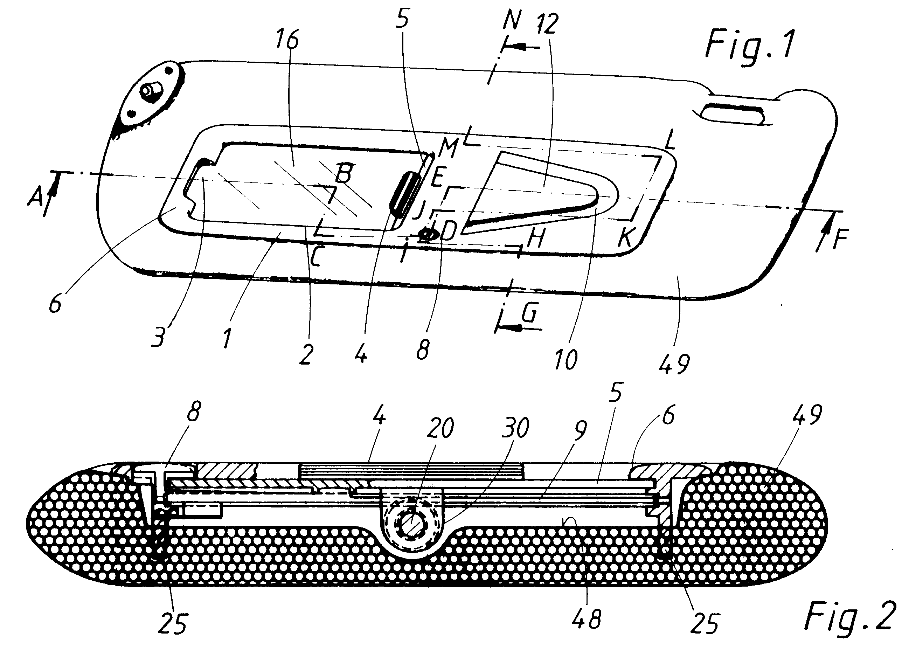

Fig. 1 und 2 zeigen einen Sonnenblendenkörper 49 mit einer Öffnung 48 in einer Breitseite zur Aufnahme einer Spiegelbaueinheit mit einem Spiegelgehäuse 1.

Das Spiegelgehäuse 1 weist auf der Sichtseite eine das Spiegelbetrachtungsfeld bildende Öffnung 2 auf. Eine Ausbuchtung 3 dient zur Aufnahme einer Griffleiste 4 am Schiebedeckel 5. Die zum Schließen des Schiebedeckels 5 angebildete Griffleiste 4 ist der Ausbuchtung 3 angepaßt damit der Gehäuserand 6 ein harmonisches, formlich geschlossenes Erscheinungsbild aufweist. Im unteren Bereich, ungefähr mittig des Spiegelgehäuses 1 ist ein Durchgangsloch 7 für die Positionierung und Betätigung des Druckknopfes 8 vorgesehen, der am Entriegelungselement 9 integriert ist. Neben der Öffnung 2 ist im Spiegelgehäuse 1 eine örtliche Vertiefung 10 mit einem Öffnungsschlitz 11 für die Ticketklammer 12 vorgesehen.

Auf der Unterseite des Spiegelgehäuses 1 befinden sich an den beiden Längsstegen 13 die Führungsnuten 14 für den Schiebedeckel 5, die Positionierungsnuten 15 für den Spiegel 16, die an den beiden Stirnseiten 17 des Gehäuses 1 angeordneten Stege 18 mit Positionierungsloch 19 für die Führungsstange 20, dem einseitig angebrachten Schlitz 21 in einem Längssteg 13 für die Lagerung des Entriegelungselement 9, dem Freibereich 22 in dem anderen Längssteg 13 zur Führung des Entriegelungselements 9, den beiden Aufnahmeschlitzen 23 in einem Längssteg 13 für die Steckmontage der Blattfeder 24, sowie den örtlich erhöhten Bereichen 25 der Längsstege 13 für eine sogenannte Spiegel-bzw. Vibrationsschweißung.

Die Ticketklammer 12 ist in ihrer Form und maßlich der Vertiefung 10 im Gehäuse 1 angepaßt und weist einen stufenförmigen Absatz 26 mit zumindest zwei erhabenen keilförmigen angebildeten Stegen 27 für Ultraschallverschweißung auf.

Der Schiebedeckel 5 weist die Griffleiste 4 und an der Unterseite eine keilförmige Erhebung 28 sowie an der Endschmalseite 29 einen Steg 30 auf, der versehen ist mit einem Aufnahme- bzw. Führungsloch 31 für die Führungsstange 20 sowie einer Anlagedruckfläche 32 für die Druckfeder 33.

Das Entriegelungselement 9 mit dem angebildeten Druckknopf 8 hat eine keilförmige Erhebung 34 zwecks Verrastung mit der keilförmigen Erhöhung 28 des Schiebedeckels 5, wenn der Schiebedeckel 5 in seine Schließstellung (Abdeckung des Spiegels) geschoben wird.

Die Blattfeder 24 weist neben den beiden angebildeten Steckzungen 35 einen rechtwinklig abgewinkelten Steg 36 zwecks Abstützung an dem Längssteg 13 auf, sowie eine maß- und funktionsgerecht abgestimmte Abknickung 37 mit dem Entriegelungselement 9 zur Erzeugung einer erforderlichen Betätigungs- bzw. Verriegelungskraft.

Der Spiegel 16 hat bei Glasausführung einen Rückenbelag 38 zwecks Splitterbindung bei eventuellem Spiegelbruch.

Die Führungsstange 20, vorzugsweise aus verstärktem Kunststoff, hat an einem Ende einen angebildeten Anschlagsflansch 39 und am gegenüberliegenden Ende wird ein Filz-/Gummipuffer 40 zur Anschlagsdämpfung beim Aufspringen des Schiebedeckels 5 aufgedrückt.

Die Druckfeder 33 wird auf die Führungsstange 20 aufgeschoben bevor diese mit dem Schiebedeckel 5 und den Stegen 18 montiert wird.

Zur Montage wird zunächst das Spiegelgehäuse 1 mit der Ticketklammer 12 verschallt, derart, daß der Absatz 26 der Ticketklammer 12 in den vorgesehenen Öffnungsschlitz 11 im Spiegelgehäuse 1 eingeschoben wird. Die Stege 27 werden mittels Ultraschall verschweißt und dabei mit dem Gehäuse 1 örtlich verbunden. Durch die maßliche Auslegung der Vertiefung 10 und der Ticketklammer 12 entsteht ein Luftspalt 41 zwecks Einführungsmöglichkeit und Deponie diverser Zettel, Tickets ect..

Je nach Stylingwunsch könnte die Ticketklammer 12 auf der Sichtseite das entsprechende Kundenlogo integriert haben.

Im zweiten Schritt erfolgt die Montage des Schiebedeckels 5 derart, daß dieser von der Unterseite des Spiegelgehäuses 1, und zwar von der Ticketklammerbereichsseite her, in die dafür vorgesehenen Führungsnuten 14 eingeschoben wird, die in den links- und rechtsseitlichen Längsstegen 13 angeordnet sind. Der Schiebedeckel 5 verschließt nach dem Verschieben in seine Verschlußstellung das Spiegelbetrachtungsfeld.

Als nächstes wird der Spiegel 16 von der Stirnseite 17 her in den Schlitz 44 in der Querwandung 45 und in die Positionierungsnuten 15, die an den Längsstegen 13 links und rechts angeordnet sind, eingeschoben. Die Erhebung 46 soll den Spiegel 16 gegen ungewolltes Verschieben sichern. Die Führungsnuten 14 und Positionierungsnuten 15 sind durch einen Distanzsteg 42 voneinander getrennt, um einen Abstand zwischen Schiebedeckel 5 und Spiegel 16 zu schaffen, zwecks Vermeidung von Reibung, Schleifen, Klappern ect.. Spiegel 16 und Schiebedeckel 5 haben jetzt eine deckungsgleiche Position.

Nun kann das Entriegelungselement 9 mit dem glatten Ende in den Schlitz 21 im Längssteg 13 eingeschoben werden. Der Druckknopf 8 mit der Anbindung 43 greift dann in das dafür vorgesehene Durchgangsloch 7 im Spiegelgehäuse 1 und dem Freibereich 22 des Längssteges 13 ein und wird hier geführt und positioniert.

Die Blattfeder 24 wird mit den beiden Steckzungen 35 in die dafür in einem Längssteg 13 vorgesehenen Aufnahmeschlitze 23 eingedrückt. Der abgewinkelte Steg 36 vermeidet ein Abkippen, da dieser sich an der Innenwandung des Langssteges 13 abstützt. Durch die Abknickung 37 wird eine maßliche Abstimmung und Stabilisation der Blattfeder 24 bewirkt sowie ein permanenter Druck auf das Entriegelungselement 9 ausgeübt. Die Kraft ist dabei so ausgelegt und vorbestimmt, daß diese ausreicht um die beiden keilförmigen Erhöhungen 28 und 34 in Schließstellung zu halten. Diese Schließkraft kann durch Fingerdruck überwunden werden, um die Verriegelung, gebildet durch die Keile 28 und 34, zu öffnen bzw. freizugeben.

Die Führungsstange 20 mit der montierten aufgeschobenen Druckfeder 33 wird derart in ihre spätere Endposition gebracht, daß zunächst die Spiegelabdeckung 5 in ihre völlige Aufstellung geschoben wird, wobei der Filz- oder Gummipuffer 40 zwischen dem verbleibenden Freibereich des Schiebedeckelsteges 30 und dem Steg 18 am Spiegelgehäuse 1 gehalten wird. Nun wird die Führungsstange 20 zunächst in das Führungsloch 31 im Steg 30, dann in das Loch 47 des eingelegten Puffers 40 und dann in das Aufnahmeloch 19 des Steges 18 am Spiegelgehäuse 1 eingeschoben. Nun wird das mit dem Anschlagflansch 39 versehene Ende der Führungsstange 20 in das Aufnahmeloch 19 des Steges 18 eingedrückt.

Die Durckfeder 33 übt nun aufgrund ihrer vorbestimmten Auslegung (Länge, Windungen, Drahtdurchmesser, ect.) zwischen dem Anschlagsflansch 39 und der Anlagedruckfläche 32 eine ständige Kraft aus, und zwar im geschlossenen wie im geöffneten Zustand des Schiebedeckels 5. Wird nun die Drucktaste 8 am Entriegelungselement 9 niedergedrückt, werden die keilförmigen Erhebungen 28 und 34 geöffnet und die Federkraft bewirkt, daß der Schiebedeckel 5 aufspringt. Der Aufschlag wird durch den Gummipuffer 40 aufgenommen und gedämpft, wobei die Druckfeder 33 auch in dieser Aufstellung des Schiebedeckels 5 noch einen ausreichenden Druck ausübt, um selbigen in dieser Position klapper- und wackelfrei zu halten.

Nun kann diese komplette Spiegelbaueinheit in der maßlich angepaßten Öffnung 48 des z.B. umschweißten Polypropylen-Sonnenblendenkörpers 49 befestigt werden. Die Befestigung erfolgt zweckmäßigerweise mit den dafür vorgesehenen Erhöhungen 25 mittels des Verfahrens, Spiegelschweißen oder Ultraschallverschweißen oder Infrarotverschmelzung.

## Patentansprüche

1. Sonnenblende für Fahrzeuge mit einem Sonnenblendenkörper (49), der an einer Breitseite eine Öffnung (48) mit einer darin eingesetzten Spiegelbaueinheit aufweist, die ein Spiegelgehäuse (1) mit Spiegel (16) und einen im Spiegelgehäuse (1) gelagerten Schiebedeckel (5) umfaßt, der wahlweise in eine den Spiegel (16) abdeckende oder den Spiegel (16) freigebende Position verschiebbar ist, wobei das Spiegelgehäuse (1) einen abdeckenden Abschnitt aufweist, der im wesentlichen den Schiebedeckel (5) in dessen geöffneter, den Spiegel (16) freigebenden Stellung abdeckt, dadurch gekennzeichnet, daß im Spiegelgehäuse (1) weiterhin eine Öffnungsautomatik für den Schiebedeckel (5) angeordnet ist.

2. Sonnenblende nach Anspruch 1, dadurch gekennzeichnet, daß die Öffnungsautomatik durch Lösen einer den Schiebedeckel (5) in der geschlossenen Lage haltenden Verriegelungsvorrichtung betätigbar ist.

3. Sonnenblende nach Anspruch 1 oder 2, dadurch gekennzeichnet, daß die Öffnungautomatik Federmittel aufweist.

4. Sonnenblende nach mindestens einem der Ansprüche 1 bis 3, dadurch gekennzeichnet, daß für die Öffnungsautomatik eine Druckfeder (33) vorgesehen ist, die durch Verschieben des Schiebedeckels (5) in die den Spiegel (16) abdeckende Position spannbar und durch Lösen der Verriegelungsvorrichtung unter Mitnahme des Schiebedeckels (5) in die den Spiegel (16) freigebende Position entspannbar ist.

5. Sonnenblende nach mindestens einem der Ansprüche 1 bis 4, dadurch gekennzeichnet, daß die Druckfeder (33) als Schraubenfeder ausgebildet und von einer parallel zur Verschieberichtung des Schiebedeckels (5) im Spiegelgehäuse (1) gelagerten Führungsstange (20) aufgenommen ist und daß sich die Druckfeder (33) mit dem einen Ende an einem am Schiebedeckel (5) befindlichen Steg (30) und mit dem anderen Ende an einem Steg (18) des Spiegelgehäuses (1) abstützt.

6. Sonnenblende nach mindestens einem der Ansprüche 1 bis 5, dadurch gekennzeichnet, daß die Verriegelungsvorrichtung zwei entgegengesetzt ausgerichtete miteinander verrastbare zahnförmige Erhebungen (28, 34) aufweist, von denen die eine (28) an der Unterseite des Schiebedeckels (5) und die andere (34) an einem Entriegelungselement (9) angeordnet ist, wobei das Entriegelungselement (9) mit einem ein Durchgangsloch (7) im Spiegelgehäuse (1) durchsetzenden Druckknopf (8) ausgebildet und durch eine Rückstellfeder (24) abgestützt ist.

7. Sonnenblende nach mindestens einem der Ansprüche 1 bis 6, dadurch gekennzeichnet, daß das Spiegelgehäuse (1) weiterhin mit einer in einer Gehäusevertiefung (10) angeordneten Ticketklammer (12) ausgerüstet ist.

8. Sonnenblende nach Anspruch 7, dadurch gekennzeichnet, daß die Ticketklammer (12) im den Schiebedeckel (5) in dessen geöffneter Stellung abdeckenden Abschnitt des Spiegelgehäuses (1) angeordnet ist.

## Claims

1. A sun visor for vehicles comprising a sun visor body (49) which is provided on its wide side with an opening (48) with an inserted mirror arrangement, which comprises a mirror housing (1) with a mirror (16) and a sliding cover (5) which is supported in the mirror housing (1), and the sliding cover is selectively movable either into a position where it covers the mirror or into a position where it opens the mirror (16), the mirror housing (1) is provided with a covering segment, which substantially covers the sliding cover (5) in its opened position, in which it opens the mirror (16), characterized in that in the mirror housing (1) there is provided an automatic opening device for the sliding cover (5).

2. Sun visor according to claim 1, characterized in that the automatic opening device is actuated by unlocking a locking device which holds the sliding cover (5) in the closed position.

3. Sun visor according to claim 1 or 2, characterized in that the automatic opening device is provided with spring means.

4. Sun visor according to at least one of the claims 1 to 3, characterized in that the automatic opening device is provided with a compression spring (33), which is compressed by moving the sliding cover (5) into the position in which the mirror (16) is shut and is released by unlocking the locking device, dragging the sliding cover (5) into the position in which the mirror (16) is open.

5. Sun visor according to at least one of the claims 1 to 4, characterized in that the compression spring (33) is formed as a helical spring and is housed in a guide bar (20) supported in the mirror housing (1) parallel to the direction of movement of the mirror cover (5), and in that the compression spring (33) rests with one end on a rib (30) on the mirror cover (5) and with the other end on a rib (18) of the mirror housing (1).

6. Sun visor according to at least one of the claims 1 to 5, characterized in that the locking device is provided with two tooth-like projections (28, 34) which are directed in opposite directions and are blocked one against the other, in which one projection (28) is disposed on the lower side of the sliding cover (5) and the other one (34) is provided on an unlocking element (9), the unlocking element (9) being formed with a push button (8) which passes through a through bore (7) in the mirror housing (1), and the unlocking element being supported by a return spring (24).

7. Sun visor according to at least one of the claims 1 to 6, characterized in that the mirror housing (1) is also provided with a ticket clamp (12) which is disposed in a depression (10) in the housing.

8. Sun visor according to claim 7, characterized in that the ticket clamp (12) is provided in that part of the mirror housing (1) which covers the sliding cover (5) in its opened position.

## Revendications

1. Pare-soleil pour véhicules, comprenant un corps (49) du pare-soleil présentant, sur une grande face, une ouverture (48) ayant une unité de construction du miroir disposée à son intérieur, laquelle comporte un logement (1) du miroir et un couvercle à glissement (5) supporté dans le logement (1) du miroir et susceptible d'être déplacé, au choix, entre une position couvrant le miroir (16) et une position qui laisse libre le miroir (16), le logement (1) du miroir présentant une portion de couverture qui couvre essentiellement le couvercle à glissement (5) à sa position ouverte qui laisse libre le miroir (16), caractérisé en ce que dans le logement (1) du miroir est placé en outre un mécanisme automatique d'ouverture du couvercle à glissement (5).

2. Pare-soleil selon la revendication 1, caractérisé en ce que le mécanisme automatique d'ouverture est actionné par le déverrouillage d'un dispositif de verrouillage qui maintient le couvercle à glissement (5) en position fermée.

3. Pare-soleil selon la revendication 1 ou 2, caractérisé en ce que le mécanisme automatique d'ouverture présente des moyens élastiques.

4. Pare-soleil selon l'une au moins des revendications 1 à 3, caractérisé en ce qu'on prévoit, pour le mécanisme automatique d'ouverture, un ressort de compression (33) qui est destiné à être armé par le déplacement du couvercle à glissement (5) à la position couvrant le miroir (16), et est destiné à être déchargé par le déverrouillage du dispositif de verrouillage entraînant le couvercle à glissement (5) à la position qui laisse libre le miroir (16).

5. Pare-soleil selon l'une au moins des revendications 1 à 4, caractérisé en ce que le ressort de compression (33) est conformé en guise de ressort hélicoïdal et est reçu par une tige de guidage (20) supportée parallèlement à la direction de déplacement du couvercle à glissement (5) dans le logement (1) du miroir, et en ce que le ressort de compression (33) est soutenu par l'une de ses extrémités sur une nervure (30) qui se trouve sur le couvercle à glissement (5) et par son autre extrémité sur une nervure (18) du logement (1) du miroir.

6. Pare-soleil selon l'une au moins des revendications 1 à 5, caractérisé en ce que le dispositif de verrouillage présente deux reliefs (28, 34) en forme de dent, orientés l'un contre l'autre et réciproquement verrouillables, dont l'un (28) est disposé sur le côté inférieur du couvercle à glissement (5) et l'autre (34) est disposé sur un élément de déverrouillage (9), l'élément de déverrouillage (9) étant pourvu d'un poussoir (8) traversant un trou de passage (7) dans le logement (1) du miroir et étant supporté par un ressort de rappel (24).

7. Pare-soleil selon l'une au moins des revendications 1 à 6, caractérisé en ce que le logement (1) du miroir est en outre muni d'une agrafe (12) disposée dans un creux (10) du logement.

8. Pare-soleil selon la revendication 7, caractérisé en ce que l'agrafe (12) est disposée dans la portion du logement (1) du miroir qui couvre le miroir (16) à sa position ouverte.
